(19) Europäisches Patentamt
European Patent Office
Office européen des brevets

(11) **EP 4 682 842 A1**

(12) **EUROPEAN PATENT APPLICATION**
published in accordance with Art. 153(4) EPC

(43) Date of publication:
**21.01.2026  Bulletin 2026/04**

(21) Application number: **23927869.0**

(22) Date of filing: **17.03.2023**

(51) International Patent Classification (IPC):
**G06V 10/82** $^{(2022.01)}$      **G06N 3/096** $^{(2023.01)}$

(52) Cooperative Patent Classification (CPC):
**G06V 10/82; G06N 3/096**

(86) International application number:
**PCT/CN2023/082083**

(87) International publication number:
**WO 2024/192550 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **HUANG, Jianing
  Shanghai 200335 (CN)**
• **YANG, Hao
  Shanghai 200335 (CN)**
• **HE, Jiabo
  Shanghai 200335 (CN)**

(54) **DOMAIN ADAPTATION METHOD AND APPARATUS FOR SEMANTIC SEGMENTATION NEURAL NETWORK**

(57)      The present disclosure provides a method for domain adaptation of a semantic segmentation neural network, comprising: obtaining a training dataset, wherein the training dataset is annotated and includes training samples from a source domain and training samples from a target domain; and based on the training dataset, training a feature extractor of the semantic segmentation neural network using a contrastive learning loss function to obtain a trained feature extractor; wherein the trained feature extractor is used to extract features from input data from the target domain to obtain feature data for generating semantic segmentation prediction results.

FIG. 1

# Description

## Technical Field

The present disclosure generally relates to the field of computer vision, and more particularly, to methods and apparatuses for domain adaptation of semantic segmentation neural networks.

## Background

Semantic segmentation is a challenging task in the field of computer vision that attempts to understand the categories of objects and their precise locations in an input image. Semantic segmentation can assign a category label to each pixel in an image, thereby distinguishing objects belonging to the corresponding category based on this pixel-by-pixel category information. The emergence of deep learning models has enabled semantic segmentation to be achieved with high accuracy in various complex application scenarios in fields such as autonomous driving, industrial anomaly detection, medical imaging, etc. However, those skilled in the art have noticed the following problems: when a deep learning model trained on training data in one specific data domain (called the source domain) is applied to another different data domain (called the target domain), the trained deep learning model may not be able to quickly adapt to the target domain, resulting in an inability to output accurate semantic segmentation prediction results for the input data in the target domain. This is also referred to as the domain adaptation problem for deep learning models. The few-shot domain adaptation problem involves such application scenarios: the training data from the source domain are extensive or fully annotated, while only a small amount of annotated data from the target domain is available. In short, few-shot domain adaptation aims to solve the problem of how to enable a deep learning model trained on training data in the source domain to generalize well on the target domain quickly when only a small amount of annotated data from the target domain is available. Although there are currently methods for addressing domain adaptation of deep learning models, these existing methods are proposed at most for deep learning models used for classification tasks. In essence, there is an essential difference in principle between classification tasks and semantic segmentation tasks. Classification tasks only require category information at the image level, while semantic segmentation tasks require category information at the pixel-by-pixel level. As such, the current methods used to achieve domain adaptation for deep learning models performing classification tasks cannot be used directly to solve the problem of domain adaptation (especially few-shot domain adaptation) for deep learning models performing semantic segmentation tasks.

To this end, there is a need for a method to address the problem of domain adaptation of deep learning models that perform semantic segmentation tasks so that the deep learning model, when migrated to a new data domain (i.e., the target domain), can obtain accurate semantic segmentation prediction results for the target domain.

## Summary of the Invention

It is desirable to provide a method for domain adaptation for semantic segmentation neural networks that utilizes a contrastive learning algorithm to enable the semantic segmentation neural networks trained on training data in a source domain to quickly be generalized well on a target domain, thereby obtaining accurate semantic segmentation prediction results for the target domain.

According to one aspect of the present disclosure, a method of domain adaptation of a semantic segmentation neural network is provided, comprising: obtaining a training dataset, wherein the training dataset is annotated and includes training samples from a source domain and training samples from a target domain; and based on the training dataset, training a feature extractor of the semantic segmentation neural network using a contrastive learning loss function to obtain a trained feature extractor; wherein the trained feature extractor is used to extract features from input data from the target domain to obtain feature data for generating semantic segmentation prediction results.

According to another aspect of the present disclosure, an apparatus for domain adaptation of a semantic segmentation neural network is provided, comprising: a memory; and a processor. The processor is coupled with the memory and is configured to perform the method according to any one of various examples of the present disclosure.

According to yet another aspect of the present disclosure, a computer-readable medium is provided, a computer program comprising instructions is stored in the computer-readable medium, and the instructions, when executed by the processor, cause the processor to perform the method according to any one of various examples of the present disclosure.

## Brief Description of the Drawings

Various examples of the subject matter claimed are described by way of examples with reference to the accompanying drawings. The same reference signs are used in different accompanying drawings to denote the same or similar components.

FIG. 1 shows a schematic diagram of the operations using a deep learning model for semantic segmentation according to one example of the present disclosure.

FIG. 2A shows a schematic diagram of a feature space generated by a trained feature extractor for a training dataset from a source domain according to one example of the present disclosure.

FIG. 2B shows a schematic diagram of a feature space generated by a trained feature extractor for input data from a target domain according to one example of the present disclosure.

FIG. 3 shows a schematic diagram of the basic principles of a method for domain adaptation of a semantic segmentation neural network according to one example of the present disclosure.

FIG. 4A shows a flow chart of a method 400 for training a semantic segmentation neural network based on a contrastive learning algorithm according to one example of the present disclosure.

FIG. 4B shows a flow chart of a method 400' of migrating a trained semantic segmentation neural network to a target domain to perform prediction according to one example of the present disclosure.

FIG. 5 shows a schematic diagram of the architecture of a computing device according to one example of the present disclosure.

## Detailed Description of the Embodiments

In the following description, numerous specific details are set forth to provide a thorough understanding of the examples of the present disclosure. However, those skilled in the relevant art will recognize that the present disclosure can be practiced without one or more specific details, or the present disclosure can be practiced by using alternative methods, components, etc. In some examples, well-known structures and operations are not shown or described in detail to avoid unnecessarily obscuring the present disclosure.

Semantic segmentation has been applied in fields such as autonomous driving, industrial anomaly detection, and medical imaging. By way of semantic segmentation, a category label can be assigned to each pixel in an image, thereby distinguishing objects belonging to the corresponding category based on this pixel-by-pixel category information. The result of the semantic segmentation task can be represented by a mask indicating the identified objects in the image. Typically, objects of different categories are typically indicated with masks of different colors. The semantically segmented images can be further used as input for subsequent processing. For example, in the field of autonomous driving, path planning, navigation, etc. can be performed based on the objects in the semantically segmented images. Currently, it has been proposed to use deep learning models to achieve semantic segmentation in various complex application scenarios with high accuracy.

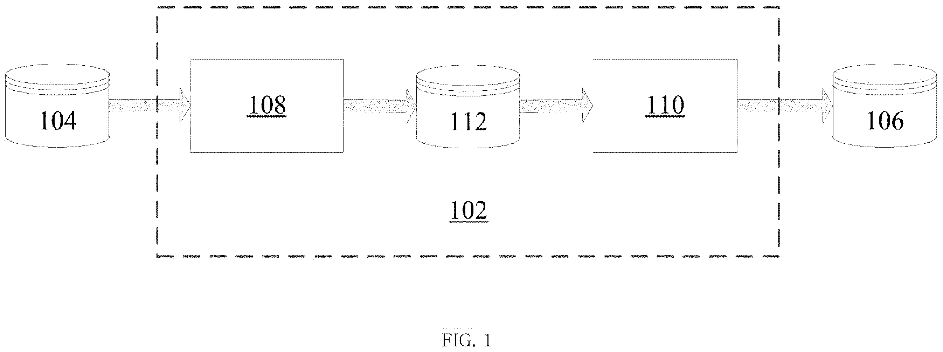

FIG. 1 shows a schematic diagram of the operations using a deep learning model for semantic segmentation according to one example of the present disclosure. As shown in FIG. 1, when a deep learning model 102 is applied to perform a semantic segmentation task, input data 104 may be provided to the deep learning model 102 to obtain a semantic segmentation prediction result 106.

Input data 104 refers to a set of data provided to the deep learning model 102 to perform semantic segmentation thereon. Input data 104 may include but are not limited to video frames, pictures, radar images, lidar point clouds, and various other digital images.

The deep learning model 102 may include but is not limited to any type of neural network model that can be used to perform semantic segmentation tasks, such as a convolutional neural network (CNN), a recurrent neural network (RNN), a deep belief network (DBN), a stacked autoencoder (SE), and the like. In one example, the deep learning model 102 may be a convolutional neural network based on any known or under-development model architecture, wherein such a model architecture may be, for example, U-Net, VGG, Resnet, and the like. The deep learning model 102 for performing the semantic segmentation task may also be referred to herein interchangeably as a semantic segmentation neural network.

The deep learning model 102 may include a feature extractor 108 and a classifier 110, wherein the feature extractor 108 is used to perform feature extraction on the input data 104 to obtain the feature data 112 and the classifier 110 used to perform classification on the feature data 112 to obtain a semantic segmentation prediction result 106. The feature extractor 108 and the classifier 110 may be one or more network layers of the deep learning model 102. For example, when the deep learning model 102 is implemented by a convolutional neural network using a model architecture such as U-Net, the feature extractor 108 may refer to the first N (N is a positive integer greater than 1) network layers (e.g., convolutional layers, pooling layers) of the convolutional neural network for performing feature extraction on the input data 104 and the classifier 110 may refer to the last one or more network layers of the convolutional neural network

for performing classification on the feature data 112. In one example, other neural networks such as a backbone network (not shown in the figure) may also be attached before the semantic segmentation neural network to perform preliminary feature extraction on the input data 104. In such a case, it may be considered that the concept of feature extractor 108 includes such other neural networks.

The feature extractor 108 performs feature extraction on the input data 104 (i.e., the input digital image) to transform local features in the image into a feature space. Taking the U-Net convolutional neural network discussed above as an example, assuming that the input data 104 is an image of size $M*M*3$ (where M is the number of pixels in the horizontal and vertical directions and 3 is the number of channels representing R, G, and B), after the transformation is performed by the feature extractor 108, the feature data 112 in the resulting feature space may be a feature map whose size is transformed to $N*N*k$ (N is the number of the feature samples in the horizontal and vertical directions and k is the number of the convolution channels), where $N < M$ and $k > 3$. In other words, the feature extraction process can be understood as a process of transforming the input image into a feature map with reduced size (number of pixels) and increased number of channels through a series of upsampling, downsampling, max pooling, and various other mathematical operations, wherein each feature sample in the transformed feature map can be a multi-dimensional (k-dimensional for the above example) vector and corresponds to a group or a patch of pixels in the input image.

Next, for the feature data 112 generated by the feature extractor 108, the classifier 110 may perform classification to obtain a semantic segmentation prediction result 106 indicating a category for each data sample in the input data 104. For example, further processing may be performed on the semantic segmentation prediction result 106 to obtain a mask of an object of a corresponding category in the input data 104.

To ensure the prediction accuracy of the deep learning model 102, the deep learning model 102 is usually trained before being applied to perform semantic segmentation tasks. The training phase refers to the process of iteratively inputting the training dataset into the deep learning model and obtaining the optimal model parameters by adjusting various model parameters (e.g., weights, biases). The training dataset is annotated to provide label information for each training sample. The label may indicate the category and location of a particular training sample. In the subsequent inference phase, the trained deep learning model may be used to obtain accurate prediction results for the input data.

As mentioned in the background technology section above, those skilled in the art have noticed the domain adaptation problem of deep learning models; that is, when a deep learning model trained on a training dataset in one specific data domain (called the source domain) is applied to another different data domain (called the target domain), the trained deep learning model may not be able to quickly adapt to the target domain, resulting in an inability to output accurate semantic segmentation prediction results for the input data in the target domain. The trained deep learning model may be unsuitable for the target domain for the following reasons: The distribution of data in the target domain has changed slightly relative to the source domain. The few-shot domain adaptation problem can be understood as one in which the training dataset from the source domain is large or fully annotated, while only a small amount of annotated data from the target domain is available. Few-shot domain adaptation is particularly suitable for such scenarios: semantic segmentation neural networks can usually be trained on a large amount of or fully annotated training data (for example, such training data may come from an open database such as ImageNET), while only a small number of data samples are annotated for the input data used to perform prediction (for example, input data obtained for the specific application scenario in which the semantic segmentation network is to be deployed, where in the field of autonomous driving, the input data may be images of real road conditions obtained by a vehicle). In short, few-shot domain adaptation aims to solve the problem of how to enable a deep learning model trained on training dataset in the source domain to generalize well on the target domain quickly when only a small amount of annotated data from the target domain are available.

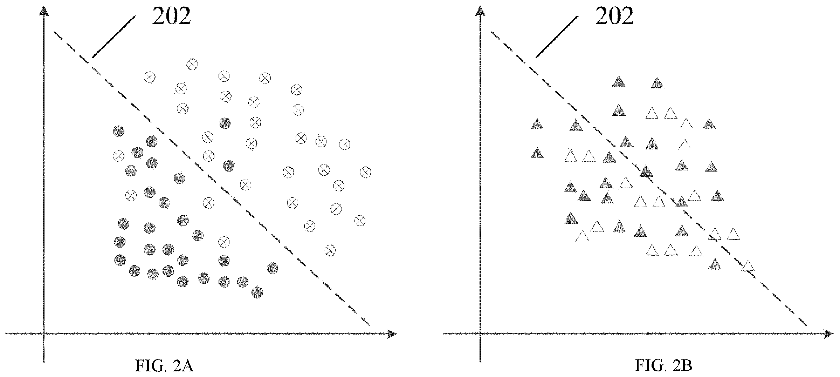

The domain adaptation problem of the deep learning model is illustrated more visually below with reference to FIGS. 2A and 2B. FIG. 2A shows a schematic diagram of a feature space generated by a trained feature extractor for a training dataset from a source domain according to one example of the present disclosure. As shown in FIG. 2A, a feature space generated after feature extraction of a training dataset from a source domain is shown in a two-dimensional space, wherein each point represents a feature sample, with white dots representing positive feature samples from the source domain and black dots representing negative feature samples from the source domain. As discussed above, the training dataset is annotated to provide label information for each training sample. The label may indicate the category and location of a particular training sample. Therefore, the category of a specific feature sample corresponding to one or more training samples can be determined based on the label information associated with each training sample. It is to be noted that the discussion herein is illustrated with the example of binary semantic segmentation, i.e., each data sample is classified into one of two categories (such as positive samples and negative samples discussed above). However, the method of the present disclosure is not limited to this binary semantic segmentation, but can classify a specific sample into one of any number of categories.

As shown in FIG. 2A, in the feature space generated by the trained feature extractor, the positive and negative feature samples are substantially separately distributed. As such, the classifier can determine a decision boundary 202, wherein through the decision boundary 202, the positive feature samples and the negative feature samples can be accurately classified. It should be noted that as discussed above, binary semantic segmentation is discussed herein as an example, so only one decision boundary is shown in the feature space. It can be imagined that for the application scenario of multi-dimensional semantic segmentation, multiple decision boundaries can be determined in the feature space. For example, two decision boundaries may be used to divide feature samples into three categories.

Next, the trained semantic segmentation neural network can be migrated to the target domain. FIG. 2B shows a schematic diagram of a feature space generated by a trained feature extractor for input data from a target domain according to one example of the present disclosure. As shown in FIG. 2B, the feature space generated after feature extraction of input data from the target domain is shown in a two-dimensional space, wherein each point represents a feature sample, with a white triangle representing a positive feature sample from the target domain and a black triangle representing a negative feature sample from the target domain. Also shown in FIG. 2B is the same decision boundary 202 as the decision boundary determined for the source domain shown in FIG. 2A. As shown in FIG. 2B, when the semantic segmentation neural network is migrated from the source domain to the target domain, due to the change in data distribution, the original decision boundary 202 trained for the source domain cannot accurately distinguish the feature samples from the target domain as positive feature samples and negative feature samples. Instead, the positive feature samples from the target domain and the negative feature samples from the target domain may be randomly distributed in the entire feature space. Thus, in this instance, the classifier may not be able to generate accurate semantic segmentation prediction results based on the feature data.

To address the above-mentioned issues, the method for domain adaptation of a semantic segmentation neural network proposed in the present disclosure can train the feature extractor of the semantic segmentation neural network based on a contrastive learning algorithm so that the trained semantic segmentation neural network can quickly adapt to the new target domain.

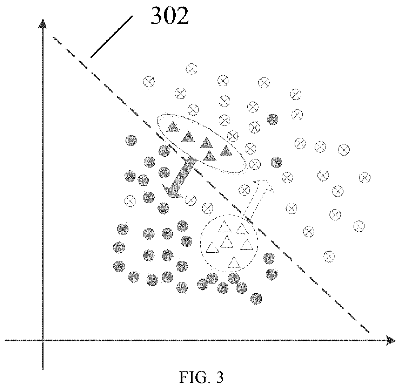

FIG. 3 shows a schematic diagram of the basic principles of a method for domain adaptation of a semantic segmentation neural network according to one example of the present disclosure. FIG. 3 shows an example data distribution in a two-dimensional feature space generated by a feature extractor for input data of a target domain after application of the domain adaptation method of the present disclosure. Similar to FIGS. 2A and 2B, in FIG. 3, white dots represent positive feature samples from the source domain, black dots represent negative feature samples from the source domain, white triangles represent positive feature samples from the target domain, and black triangles represent negative feature samples from the target domain. As such, the method for domain adaptation of semantic segmentation disclosed in the present invention aims to achieve the following effects by training the feature extractor based on the contrastive learning algorithm: the positive feature samples from the target domain (represented by white triangles) are pulled towards the positive feature samples from the source domain (represented by white dots) so that the negative feature samples from the source or target domain are distinguished from the positive feature samples from the target or source domain. Accordingly, the classifier may determine a respective decision boundary 302 for the optimized feature space such that the positive and negative feature samples can be accurately classified through the decision boundary 302 to obtain accurate semantic segmentation prediction results for the target domain.

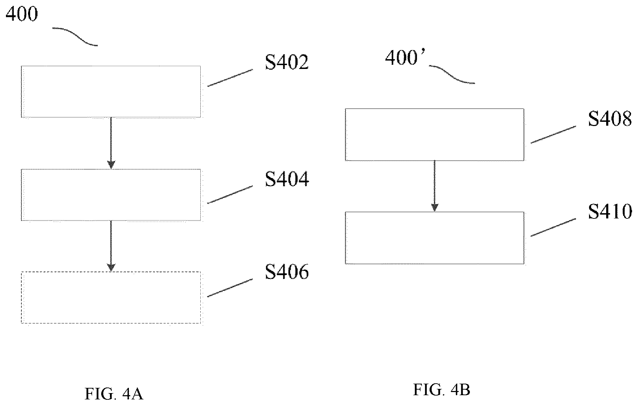

An example operational flow routine of the method for domain adaptation of a semantic segmentation neural network of the present disclosure is described below with reference to FIGS. 4A and 4B. Wherein, FIG. 4A shows a flow chart of a method 400 for training a semantic segmentation neural network based on a contrastive learning algorithm according to one example of the present disclosure. FIG. 4B shows a flow chart of a method 400' of migrating a trained semantic segmentation neural network to a target domain to perform prediction according to one example of the present disclosure.

As shown in FIG. 4A, at step S402, a training dataset may be obtained. The training dataset may comprise several digital images, and each digital image may comprise several training samples (e.g., pixels). The training dataset is annotated such that the training dataset may provide label information for each training sample. The label may indicate the category and location of a particular training sample. Therefore, through the label information, it can be determined whether a particular training sample is a positive training sample or a negative training sample. To address the domain adaptation problem discussed above, the training dataset can include training samples from the source domain and training samples from the target domain. Of which, for few-shot domain adaptation, in the training dataset, the training samples from the source domain are significantly more numerous than the training samples from the target domain. It will be understood that, as discussed above, the training samples from the source domain may be training samples that can be obtained from an open database such as ImageNET and their number may be in the order of up to tens of millions. However, the number of training samples is generally limited for the target domain to which the trained semantic segmentation neural network is to be migrated, as re-annotating such training samples in large numbers involves a heavy manual burden. By way of example, the number of training samples from the target domain may be in the order of only tens of thousands, thousands, or even hundreds. In such cases, the number of training samples from the source domain is significantly greater than the limited number of training samples from the target domain (e.g., the two are of different orders of magnitude).

At step S404, the feature extractor of the semantic segmentation neural network may be trained using a contrastive learning loss function based on the training dataset to obtain the trained feature extractor. Contrastive learning is a self-supervised learning method known in the art that is typically used to learn general features of a dataset by letting the model learn which data points are similar or different without using task-related labels.

In particular, during the process of training the feature extractor based on the contrastive learning algorithm, the training dataset can be input into the feature extractor to generate a set of training feature samples. The set of training feature samples may be in a two-dimensional feature space as shown in FIG. 3 and include several training feature samples. As discussed above with reference to FIG. 1, each training feature sample may refer to a multidimensional vector and correspond to a set of training samples. As such, each training feature sample in the set of training feature samples may be divided into a positive training feature sample or a negative training feature sample based on the label information associated with the training sample. In the training process, the performance of the trained model can usually be characterized by the degree of convergence or minimization of the loss function, where the loss function is used to measure the degree of inconsistency between the predicted value and the true value output by the model. That is, the trained optimal model parameters (including, for example, weights and biases) can be obtained by solving the loss function.

In step S404, the following contrastive learning loss function may be used:

$$L_D = -\log \frac{\exp(q_+^t \cdot k_+^s / \tau)}{\sum_{i=0}^{K} \exp(q_+^t \cdot k_i / \tau)},$$

wherein $q_+^t$ represents the positive training feature samples from the target domain, $k_+^s$ represents the positive training feature samples from the source domain, $k_i$ represents the negative training feature samples from the target domain or the source domain, K is the number of negative training feature samples, and T is an adjustable temperature coefficient. In one example, the temperature coefficient T may be selected from a set of predefined fixed values and may be switched between the set of predefined fixed values according to the convergence of the loss function. As such, the process of training the feature extractor using the above-mentioned contrastive learning loss function is intended to achieve the effect of: pulling the positive training feature samples from the target domain toward the positive training feature samples from the source domain so that in the set of training feature samples, the negative training feature samples from the source domain or the target domain are distinguished from the positive training feature samples from the target domain or the source domain.

In addition, the method 400 may further comprise an additional optional step S406, wherein the classifier of the semantic segmentation neural network may be further trained based on the training data. During the training of the classifier, the classifier may be trained while freezing the model parameters of the trained feature extractor (i.e., no longer adjusting the model parameters). Alternatively, the classifier may also be trained by adaptively adjusting the model parameters of the trained feature extractor. Additionally, in one example, the optional step S406 is not performed in the method 400, i.e., the classifier in the semantic segmentation neural network may be untrained and may be directly combined with the trained feature extractor to perform classification on the feature data generated by the feature extractor, thereby obtaining a semantic segmentation prediction result.

As shown in FIG. 4B, upon completion of the training of the semantic segmentation neural network, the trained semantic segmentation neural network may be migrated to the target domain. In particular, the method 400' of migrating the trained semantic segmentation neural network to a target domain to perform predictions may comprise, at step S408, using the feature extractor of the trained semantic segmentation neural network to extract features from the input data from the target domain to obtain feature data. Next, at step S410, the classifier of the trained semantic segmentation neural network may be used to perform classification on the feature data generated by the feature extractor to obtain a semantic segmentation prediction result. This semantic segmentation prediction result may indicate categories for each data sample in the input data.

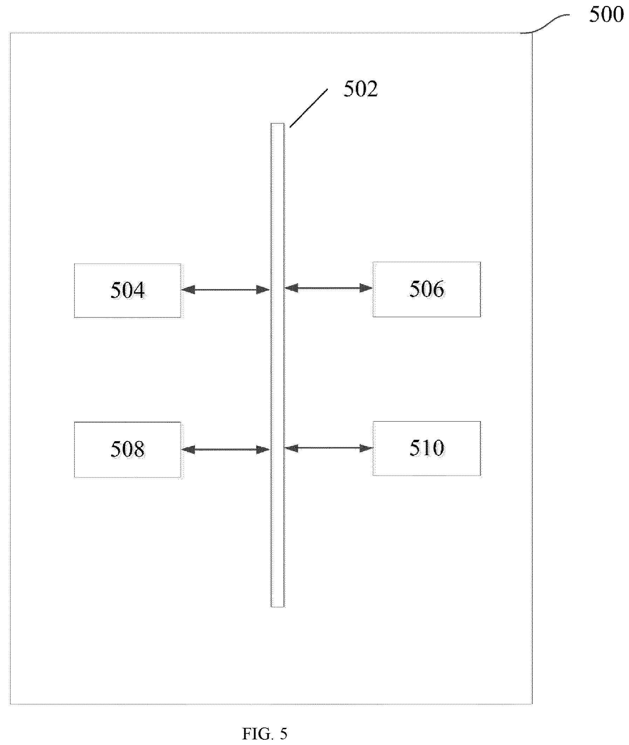

FIG. 5 shows a schematic diagram of the architecture of a computing device according to one example of the present disclosure. The method for domain adaptation of a semantic segmentation neural network of the present disclosure may be implemented on a computing device 500.

The example computing device 500 comprises an internal communication bus 502 and a processor (e.g., a central processing unit (CPU)) 504 connected to the internal communication bus 502 , the processor 504 being used for executing instructions stored in the memory 506 to implement the method for domain adaptation of the semantic segmentation neural network described in detail above. The memory 506 is suitable for physically embodying computer program instructions and data and may comprise various forms of memory, for example, semiconductor memory devices such as EPROM, EEPROM, and flash memory devices; magnetic disks such as internal hard disks and removable disks; magneto-optical disks; CD-ROM disks, etc. The computing device 500 may also comprise an input/output (I/O) interface 508, such that various I/O devices (e.g., cursor control devices such as mice, keyboards, etc.) may be coupled to the computing device 500 through the I/O interface 508 to allow a user to apply various commands and input data. The computing device 500 may also comprise a display unit 510 for displaying a graphical user interface.

The computer program may comprise instructions executable by the computer, the instructions being used for causing the processor 504 of the computing device 500 to perform the method for domain adaptation of the semantic segmentation neural network of the present disclosure. The program may be recorded on any data storage medium, including the memory. For example, the program may be implemented in digital electronic circuits or using computer hardware, firmware, software, or a combination thereof. The process/method steps described in the present disclosure can be performed by a programmable processor executing program instructions to operate on input data and generate output to perform the method steps, processes, and operations.

In addition to the content described herein, various modifications can be made to the examples and implementations of the present disclosure without departing from the scope of the examples and implementations of the present disclosure. Therefore, the description and examples herein should be interpreted as illustrative and not restrictive. The scope of the present disclosure should only be determined by reference to the Claims.

**Claims**

1. A method for domain adaptation of a semantic segmentation neural network, comprising:

   obtaining a training dataset, wherein the training dataset is annotated and includes training samples from a source domain and training samples from a target domain; and
   based on the training dataset, training a feature extractor of the semantic segmentation neural network using a contrastive learning loss function to obtain a trained feature extractor;
   wherein the trained feature extractor is used to extract features from input data from the target domain to obtain feature data for generating semantic segmentation prediction results.

2. The method according to Claim 1, wherein the trained feature extractor is used in combination with the classifier of the semantic segmentation neural network such that the classifier is able to generate semantic segmentation prediction results based on the feature data.

3. The method according to Claim 1, wherein the semantic segmentation prediction result indicates categories for each data sample in the input data.

4. The method according to Claim 1,

   wherein the training dataset provides label information for each training sample; and
   wherein the label information indicates whether the training sample is a positive training sample or a negative training sample.

5. The method according to Claim 4, wherein training the feature extractor with the contrastive learning loss function comprises:
   inputting the training dataset into the feature extractor to generate a set of training feature samples, wherein each training feature sample in the set of training features is classified as a positive training feature sample or a negative training feature sample based on the label information.

6. The method according to Claim 5, wherein training the feature extractor with the contrastive learning loss function comprises:
   according to the contrastive learning loss function, pulling the positive training feature samples from the target domain toward the positive training feature samples from the source domain so that in the set of training feature samples, the negative training feature samples from the source domain or the target domain are distinguished from the positive training feature samples from the target domain or the source domain.

7. The method according to Claim 6, wherein the contrastive learning loss function is:

$$L_D = -\log \frac{\exp(q_+^t \cdot k_+^s / \tau)}{\sum_{i=0}^{K} \exp(q_+^t \cdot k_i / \tau)},$$

wherein $q_+^t$ represents the positive training feature samples from the target domain, piece represents the positive training feature samples from the source domain, send represents the negative training feature samples from the target domain or the source domain, K is the number of negative training feature samples, and T is an adjustable temperature coefficient.

8. The method according to Claim 1, wherein in the training dataset, the training samples from the source domain are significantly more numerous than the training samples from the target domain.

9. The method according to Claim 2, further comprising: upon obtaining the trained feature extractor, training the classifier based on the training dataset.

10. The method according to Claim 9, wherein training the classifier comprises:

    training the classifier while freezing the model parameters of the trained feature extractor; or
    training the classifier by adaptively adjusting the model parameters of the trained feature extractor.

11. An apparatus for domain adaptation of a semantic segmentation neural network, comprising:

    a memory;
    a processor coupled to the memory, the processor being configured to perform the method according to any one of Claims 1-10.

**EP 4 682 842 A1**

**12.** A computer-readable medium storing a computer program comprising instructions, that, when executed by the processor, cause the processor to be configured to execute the method according to any one of Claims 1-10.

EP 4 682 842 A1

FIG. 1

202

FIG. 2B

202

FIG. 2A

302

FIG. 3

400

| |
|---|
| S402 |

↓

| |
|---|
| S404 |

↓

| |
|---|
| S406 |

FIG. 4A

400'

| |
|---|
| S408 |

↓

| |
|---|
| S410 |

FIG. 4B

FIG. 5

## INTERNATIONAL SEARCH REPORT

| International application No. |
|---|
| **PCT/CN2023/082083** |

**A.    CLASSIFICATION OF SUBJECT MATTER**

G06V10/82(2022.01)i;  G06N3/096(2023.01)n

According to International Patent Classification (IPC) or to both national classification and IPC

**B.    FIELDS SEARCHED**

Minimum documentation searched (classification system followed by classification symbols)

IPC: G06V G06N

Documentation searched other than minimum documentation to the extent that such documents are included in the fields searched

Electronic data base consulted during the international search (name of data base and, where practicable, search terms used)

CNABS, CNTXT, VEN, USTXT, CNKI, IEEE: 源域, 目标域, 适应, 迁移, 特征提取, 分类器, 标签, 样本, 对比学习, domain, source, target, adapt, migrate, feature extraction, classifier, label, sample, comparative learning

**C.    DOCUMENTS CONSIDERED TO BE RELEVANT**

| Category* | Citation of document, with indication, where appropriate, of the relevant passages | Relevant to claim No. |
|---|---|---|
| X | CN 115205664 A (DALIAN UNIVERSITY OF TECHNOLOGY) 18 October 2022 (2022-10-18)<br>    description, paragraphs 0038-0059 | 1-12 |
| A | CN 115578557 A (HANGZHOU LINGJIAN DIGITAL AGRICULTURAL TECHNOLOGY CO., LTD.) 06 January 2023 (2023-01-06)<br>    entire document | 1-12 |
| A | US 2022230066 A1 (QUALCOMM INC.) 21 July 2022 (2022-07-21)<br>    entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082083**

| Patent document cited in search report | | | Publication date (day/month/year) | Patent family member(s) | | | Publication date (day/month/year) |
|---|---|---|---|---|---|---|---|
| CN | 115205664 | A | 18 October 2022 | None | | | |
| CN | 115578557 | A | 06 January 2023 | None | | | |
| US | 2022230066 | A1 | 21 July 2022 | WO | 2022159960 | A1 | 28 July 2022 |

Form PCT/ISA/210 (patent family annex) (July 2022)